# FASCICULE DE BREVET EUROPEEN

(11) **EP 2 885 978 B1**
(45) Date de publication et mention de la délivrance du brevet: **03.05.2017**
(21) Numéro de dépôt: 14198365.0
(22) Date de dépôt: 16.12.2014
(51) Int. Cl.: A23C 19/09, A23C 19/00

(54) **Produit alimentaire fromager ou laitier sec de type snack et son procédé de fabrication**
Käse- oder Trockenmilch-Lebensmittelprodukt vom Typ Snack, und sein Herstellungsverfahren
Dry cheese or dairy snack food product and method for manufacturing same

(30) Priorité: 20.12.2013 FR 1363224; 16.06.2014 FR 1455440
(43) Date de publication de la demande: 24.06.2015
(73) Titulaire: BONGRAIN S.A., 78220 Viroflay (FR)
(72) Inventeur: Oustric, Claude, 28130 CHARTAINVILLIERS (FR); Beudon, Didier, 78120 RAMBOUILLET (FR)
(74) Mandataire: Gevers & Orès

(56) Documents cités:
- WO-A1-2013/039410
- WO-A1-2013/104749
- WO-A2-2012/034218
- FR-A1- 2 750 015
- US-A- 4 719 118
- US-A1- 2006 083 842
- US-A1- 2010 104 726
- "GROK - Grokkanti delizie con Grana Panado", , 16 mai 2011 (2011-05-16), XP055167948, Extrait de l'Internet: URL:http://www.grok.it/en/discover-us/pdf/ brochure.pdf [extrait le 2015-02-06]

## Description

La présente invention se rapporte au domaine de l'industrie alimentaire ; elle vise plus particulièrement un produit alimentaire fromager ou laitier sec de type snack et son procédé de fabrication.

Il existe une grande variété de produits alimentaires de type snack sur le marché ; on entend par produit alimentaire de type snack des aliments de petite dimension, c'est-à-dire représentant une portion individuelle qui puisse être ingérée en une ou plusieurs bouchées et généralement destinée à être consommée avec les doigts. La plupart des produits alimentaires de type snack, secs, au goût salé disponibles commercialement sont essentiellement composés de glucides, d'arômes ajoutés et de graisses (type chips, produits soufflés ou extrudés) ; ils présentent un intérêt nutritionnel très limité, raison pour laquelle la consommation de ce type de produit est souvent critiquée.

La Demanderesse a mis au point un nouveau produit alimentaire fromager sec de type snack qui est préparé exclusivement à partir de fromage ou de spécialité fromagère. De façon étonnante, elle est parvenue à transformer, par un procédé original, des découpes de fromage de type pâte pressée cuite maigre en snack sec gonflé de forme creuse ayant une texture croustillante ; la préparation de ce nouveau produit ne nécessite pas d'ajout d'ingrédient additionnel ; le produit alimentaire obtenu est très sec, se réhydrate très peu et garde ainsi une texture croustillante et l'effet en bouche recherché.

A l'aide de ce procédé, la Demanderesse a ensuite mis au point un nouveau produit alimentaire laitier sec préparé à partir d'un mélange de produits laitiers ; comme le produit alimentaire fromager sec, ce produit alimentaire laitier sec se présente sous la forme d'un snack gonflé et croustillant qui peut différer du produit alimentaire fromager sec par sa couleur, son gout qui est naturellement un gout lacté neutre auquel des arômes peuvent être ajoutés, et sa composition.

On connaît dans l'état de la technique par exemple le document WO2013/039410 qui décrit un procédé de préparation de chips de fromage dont la surface est recouverte de bulles plus ou moins grandes.

La présente invention a ainsi pour objet un procédé de fabrication de produit alimentaire fromager ou laitier sec, aussi désigné par produit fini dans ce qui suit, comprenant les étapes suivantes :
a) Congélation d'un fromage choisi parmi les pâtes pressées cuites et les fromages fondus ou d'un mélange laitier ayant une consistance permettant sa mise sou forme de tranches et leur manipulation, jusqu'à une température inférieure ou égale à -20°C ; ledit fromage ou ledit mélange laitier a une teneur en matière grasse inférieure ou égale à 40% en poids, cette teneur en matière grasse est exprimée par rapport au poids de fromage ou de mélange laitier mis en oeuvre initialement et correspond à une teneur de matière grasse inférieure ou égale à 40 g / 100 g de fromage ou de mélange laitier mis en oeuvre initialement, de préférence, cette teneur en matière grasse est comprise entre 3 et 25%, et encore préférentiellement entre 5 et 16% en poids ; ledit fromage ou mélange laitier est préalablement préparé en tranche d'une épaisseur inférieure ou égale à 4 mm, de préférence, comprise entre 0,1 et 2 mm, encore préférentiellement comprise entre 0,5 et 1,5 mm ;
b) Mise sous vide dudit fromage congelé ou dudit mélange laitier congelé à une pression comprise entre 0,1 et 100 mbar ;
c) Chauffage dudit fromage congelé ou dudit mélange laitier congelé sous vide :
   c1) Phase 1 : augmentation rapide de la température dudit fromage ou dudit mélange laitier jusqu'à une température de l'ordre de 110-120°C, en 12 à 120 minutes (en 0,2 à 2 heures), à une pression comprise entre 0,1 et 100 mbar et un flux d'extraction de la vapeur d'eau de 0,4 à 10 kg d'eau par kg de fromage ou de mélange laitier et par heure ; et
   c2) Optionnellement, phase 2 : cuisson à une température comprise entre 60 et 160°C, une pression comprise entre 0,1 et 100 mbars et pendant 5 à 60 minutes ;
d) Refroidissement sous vide, à une pression comprise entre 0,1 et 100 mbar, jusqu'à une température comprise entre la température ambiante (15-20°C) et 80°C à la vitesse de diminution de la température comprise entre 50 et 70°C par heure ;
e) Pressurisation par compensation du vide avec un gaz sec, c'est-à-dire ayant un taux d'humidité inférieur à 3 ppm, de préférence, de l'azote gazeux.

Par fromage, on entend un fromage de type pate pressée cuite ou un fromage fondu ayant une teneur en matière grasse inférieure ou égale à 40% en poids.

Parmi les fromages maigres à pâte pressée cuite utilisables dans le procédé de l'invention, on peut citer le Fol Epi allégé, Leerdammer allégé, l'Emmental maigre, Holland Cheese Master allégé.

Le procédé selon l'invention peut également être mis en oeuvre avec un fromage fondu obtenu à partir d'un mélange de fromages à pâte pressée cuite, fromages à pâte pressée non cuite, poudre de lait, poudre de caséine, par exemple, poudre de caséinate, crème laitière, optionnellement en présence de moins de 3% de sel de fonte, tel que du citrate de sodium, ou d'un autre ingrédient facilitant la fonte du fromage.

Le procédé selon l'invention peut encore être mis en oeuvre à partir de mélange laitier ayant une teneur en matière grasse inférieure ou égale à 40% en poids et obtenu à partir d'un mélange de produits laitiers choisis parmi du caillé frais, du fromage frais, du fromage à pâte molle, de la poudre de lait, de la poudre de caséine, par exemple de la poudre de caséinate, de la crème laitière, du beurre , optionnellement en présence de moins de 3% de sel de fonte, tel que du citrate de sodium, ou d'un autre ingrédient facilitant la fonte du fromage. Le mélange laitier doit avoir une consistance permettant sa mise sous forme de tranches et leur manipulation.

Selon un mode de réalisation particulier, les produits de départ, le fromage, incluant les fromages fondus, ou le mélange laitier, ne comprennent pas de glucides d'origine végétale tels que de l'amidon ou des fibres.

Selon une variante de l'invention, le produit de départ, en particulier lorsqu'il s'agit du fromage fondu ou du mélange laitier, peut également comprendre jusqu'à 5% en poids par rapport au poids total de fromage ou de mélange laitier, d'arômes, d'aromates ou de marquants, pour modifier le goût, la saveur et l'aspect final du produit fini.

L'avantage de l'utilisation de fromage fondu ou du mélange laitier est que sa préparation permet de contrôler, et en particulier de diminuer, la teneur en matière grasse du produit fini.

Le fromage ou le mélange laitier utilisé a de préférence une teneur minimum en CO₂ de 5 mmole/kg ; cette teneur minimum en CO₂ provient d'une fermentation propionique qui se produit lors de la fabrication dudit fromage ou bien d'une incorporation de CO₂ pendant la fabrication dudit fromage ou dudit mélange laitier, sous forme de gaz ou de carbonate.

Les morceaux de fromage ou de mélange laitier peuvent avoir toute forme géométrique à partir du moment où leur épaisseur est inférieure à 4 mm ; les dimensions de ces morceaux seront de préférence telles que le produit alimentaire fromager ou laitier sec obtenu puisse être ingéré en une ou deux bouchées, c'est-à-dire s'inscrivant dans un rectangle ayant une largeur comprise entre 0,1 et 3 cm et, de préférence, entre 1 et 3 cm, et une longueur comprise entre 0,1 et 11 cm et, de préférence, entre 1 et 10 cm.

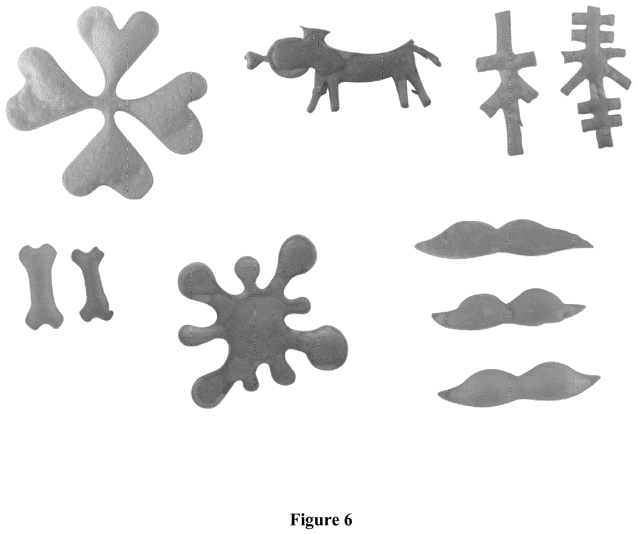

Un avantage du procédé selon l'invention est qu'il peut être mis en oeuvre avec des morceaux de fromage ou de mélange laitier de forme géométrique complexe comportant par exemple des parties concaves voire des creux ou des parties évidées comme par exemple des formes de trèfles, d'os, d'anneaux... incluant des formes sécables ; ces formes complexes sont illustrées à la Figure 6.

La préparation des morceaux de fromage peut, par exemple, être réalisée par débit d'un fromage en tranches puis découpage à l'emporte-pièce.

Lorsque le produit de départ est un fromage fondu ou un mélange laitier, il est formé à une température comprise entre 45 et 120°C, de préférence entre 45 et 90°C, puis, soit passé à travers une filière ayant la forme souhaitée (extrusion) et découpé en morceaux d'une épaisseur inférieure ou égale à 4 mm, soit coulé à plat sur une épaisseur inférieure ou égale à 4 mm puis découpé à l'emporte-pièce.

Le procédé selon l'invention comprend deux variantes adaptées au produit de départ, fromage ou mélange laitier, dans le but de préparer des produits finis ayant des caractéristiques très similaires en termes de forme tridimensionnelle et de croustillant mais dont le goût et la couleur peuvent être modifiés permettant ainsi de décliner des gammes de produits finis.

Ainsi, l'invention repose notamment sur la mise au point d'un procédé permettant un gonflement du produit de départ, fromage ou mélange laitier, grâce à un chauffage rapide et sous vide des morceaux de fromage ou de mélange laitier congelés (étape c1).

Selon une des variantes du procédé, ce dernier comprend également une étape c2 qui est une phase de cuisson au cours de laquelle le goût du produit se développe ; cette variante est de préférence mise en oeuvre lorsque le produit de départ est un fromage ou un fromage fondu.

Les consignes de température et de pression appliquées lors de la phase de traitement c2, permettent d'ajuster la qualité sensorielle du produit fini : couleur, texture, arôme, en fonction de la cible souhaitée. Ces consignes peuvent être variables dans le temps.

Selon une autre variante, le procédé selon l'invention peut être conduit sans l'étape c2 de cuisson ; cette variante est mise en oeuvre dans le cas où il n'est pas souhaitable d'obtenir une coloration du produit fini, ni le développement d'un goût de « cuit », en particulier lorsqu'on cherche à préparer un produit de la couleur du fromage ou du mélange laitier de départ. Cette variante est particulièrement adaptée à la préparation de produit fini blanc ou très pale en partant d'un mélange laitier.

D'un point de vue géométrique, le produit alimentaire fromager ou laitier sec obtenu par ce procédé se caractérise par des dimensions comprises dans les mêmes gammes et une forme similaire à celles des morceaux utilisées comme produit de départ dans le procédé selon l'invention ; le procédé confère au produit une forme gonflée tridimensionnelle, c'est-à-dire qu'il présente une surface externe continue sans porosité, légèrement bosselée, de préférence lisse, avec deux faces convexes et des bords soudés et qu'il est creux, soit totalement, soit partiellement avec de nombreuses et larges cavités ; des exemples de cette structure caractéristique des produits finis sont représentés aux Figures 1 et 2 qui montrent, respectivement, des pièces de profil rectangulaire et des pièces de profil triangulaire ; la Figure 3 illustre également la forme creuse du produit selon l'invention ; la Figure 5 représente, quant à elle, des pièces de profil triangulaire dont l'intérieur est partiellement creux ; enfin, la Figure 6 illustre des snacks selon l'invention ayant des formes complexes, notamment sécables ; selon un mode de réalisation particulier de l'invention, le produit alimentaire fromager ou laitier sec selon l'invention a une forme complexe sécable (par exemple une forme de trèfle).

Le produit fini obtenu selon le procédé se distingue notamment des produits alimentaires existants par :
- l'aspect de leur surface : les produits existants ont une surface très irrégulière, poreuse ou granuleuse, comportant de nombreux reliefs et souvent des trous, alors que celle du produit alimentaire selon l'invention est uniforme et lisse, et
- leur structure creuse, totalement ou partiellement évidée, c'est-à-dire que leur intérieur est constitué d'une cavité unique ou de plusieurs larges cavités, alors que les produits alimentaires existant sont pleins avec une multitude de petites cavités qui ne communiquent pas entre elles (texture mousseuse sèche).

En termes de composition, le produit alimentaire fromager sec est un produit laitier lyophilisé caractérisé par :
- une faible activité en eau (a_{W}), c'est-à-dire comprise entre 0,1 et 0,4 ;
- un goût de fromage provenant des aromes naturels du fromage utilisé ;
- un ratio massique protéine/graisse conservé par rapport au produit de départ.

Le produit alimentaire laitier sec, quant à lui, est un produit laitier lyophilisé, obtenu à partir d'un mélange laitier, caractérisé par :
- une faible activité en eau (a_{W}), c'est-à-dire comprise entre 0,1 et 0,4 ;
- un ratio massique protéine/graisse conservé par rapport au produit de départ ;
- un goût lacté neutre si aucun arôme ne lui est ajouté.

Alternativement, en raison de son goût neutre, le produit alimentaire laitier sec peut être aromatisé en ajoutant un arôme salé et/ou sucré lors de la préparation du mélange laitier ; comme indiqué précédemment, cet ajout ne représente pas plus de 5% en poids par rapport au poids total du produit de départ, l'homme du métier saura associer et doser le ou les arômes selon l'effet recherché.

Enfin, sur le plan organoleptique, le produit alimentaire fromager ou laitier sec se caractérise par une texture très croustillante, mise en évidence dans des tests sensoriels par comparaison avec des produits de référence (voir l'exemple II ci-après).

Le produit fini présente l'avantage de pouvoir être consommé directement sans autre traitement et, en particulier, sans assaisonnement. Il s'agit donc d'un produit sans graisse ni sel ajoutés qui présente le même intérêt nutritionnel que le fromage ou le mélange laitier à partir duquel il est fabriqué (c'est-à-dire qu'il comprend la même quantité de sel et de graisse que le produit de départ) ; en particulier, il est possible de préparer des produits alimentaires fromagers ou laitiers secs ayant une teneur importante en protéines, c'est-à-dire supérieure ou égale à 30%, de préférence supérieure ou égale à 50%, encore préférentiellement supérieure ou égale à 60% en poids de protéines totales par rapport au poids total du produit. En outre, le produit selon l'invention a une très faible teneur en glucides et représente un meilleur apport nutritionnel que les snacks à base de glucides et les chips.

De même, grâce à la maîtrise de la composition du mélange laitier servant à la préparation du produit alimentaire laitier sec, il est possible de préparer un produit d'origine uniquement laitière ayant des teneurs en graisse et en sel limitées. Si le procédé selon l'invention permet la préparation d'un produit fini ayant une faible teneur en glucides, il peut également être intéressant de modifier la recette du mélange laitier de départ en substituant de la matière grasse par des glucides pour réduire l'apport calorique du produit fini.

Les produits alimentaires fromagers ou laitiers secs selon l'invention peuvent être consommés seuls ou en accompagnement de plats comme des soupes ou des salades ; ils peuvent également être consommés après trempage dans une préparation pâteuse type guacamole, houmous ou tarama.

L'utilisation des produits alimentaires fromagers ou laitiers secs selon l'invention ne se limite pas à l'alimentation humaine mais peut également concerner l'alimentation animale.

### FIGURES

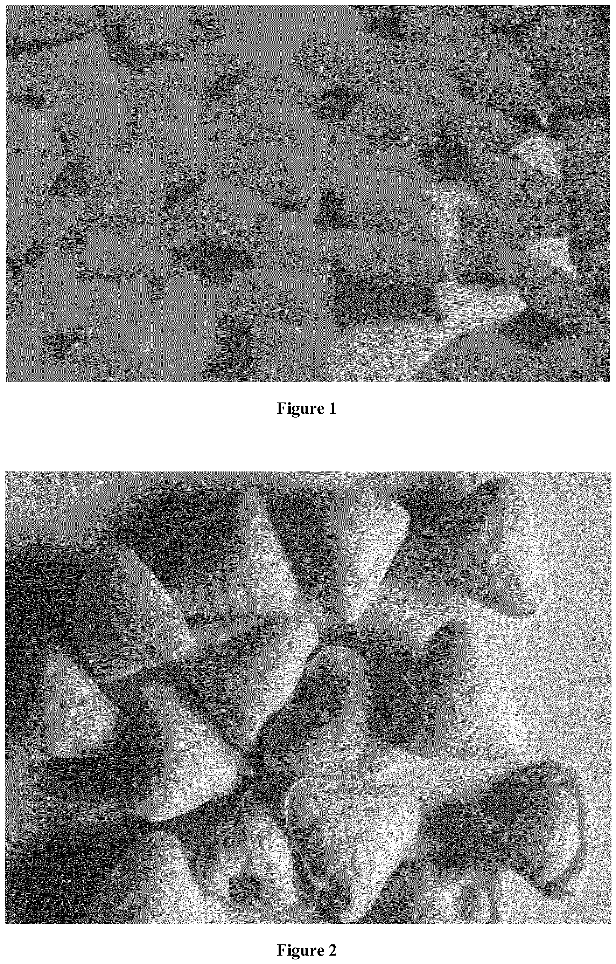

Les **Figures 1** et **2** sont des photographies de produits alimentaires fromagers secs selon l'invention qui ont, respectivement, un profil rectangulaire et un profil triangulaire.

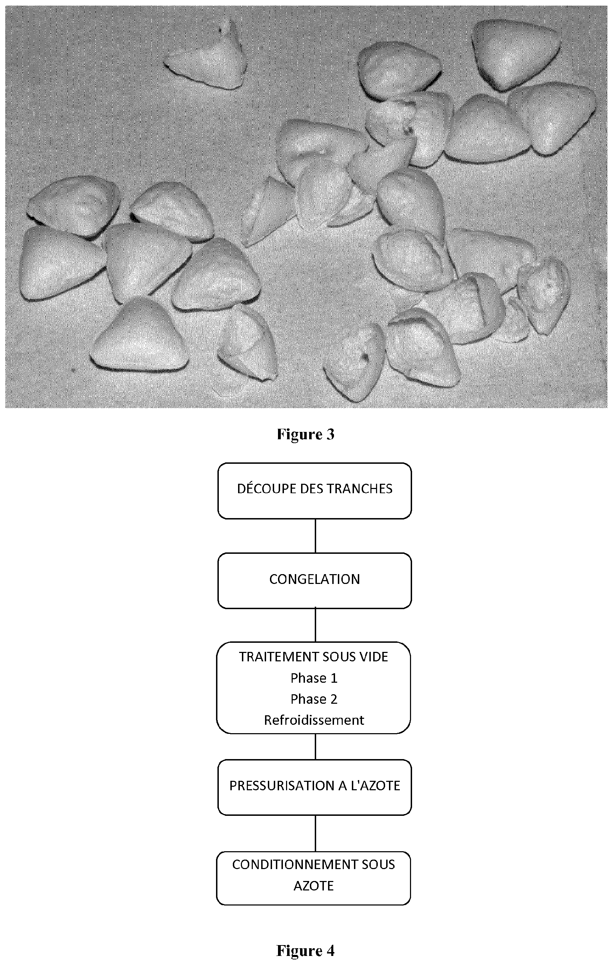

La **Figure 3** montre une coupe transversale d'un produit alimentaire fromager sec ; ce cliché montre bien la forme creuse et gonflée dudit produit.
La **Figure 4** montre un diagramme de traitement pour la préparation de produit alimentaire fromager sec selon l'invention.

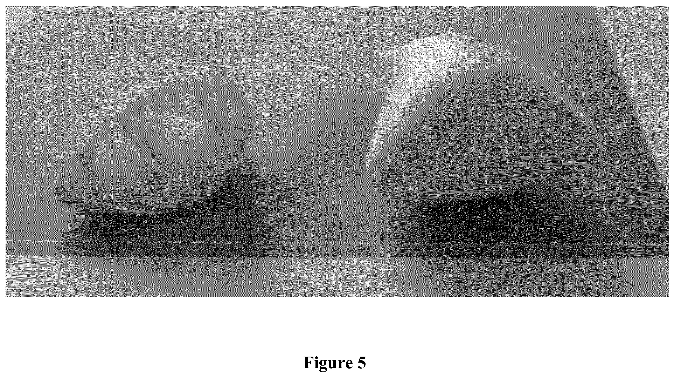

La **Figure 5** est une photographie de produits alimentaires laitiers secs selon l'invention ayant un profil triangulaire et dont l'intérieur est partiellement creux.
La **Figure 6** est une photographie de produits alimentaires selon l'invention ayant une forme complexe.

### EXEMPLE I - PREPARATION DE PRODUIT ALIMENTAIRE FROMAGER SEC SELON L'INVENTION

### Diagramme de traitement : Figure 4

### Réalisation

Sont préparés des morceaux de fromage de forme triangulaire à bouts arrondis, d'environ 25 mm de côté, en tranches d'environ 1 mm d'épaisseur, à partir de fromage à pâte pressée cuite maigre de type Fol Epi Allégé.

Les pièces sont disposées sur des plaques de 39 X 48 cm et mises au congélateur à -55°C pendant 2 heures.

Les plaques de fromage congelé sont placées dans un lyophilisateur.

Une table de programmation permet la réalisation des phases de traitement souhaitées :
➢ Lancement du cycle de chauffage automatiquement après atteinte de la pression cible de 0.2 mbar dans l'enceinte de traitement ;
➢ Mise en température rapide des résistances de chauffe à 120°C (0 à 30 min) ;
➢ Maintien de la température de chauffe à 120°C pour 1 heure ;
➢ Refroidissement à 60°C, après 1 heure ;
➢ Mise en pression atmosphérique par ajout d'azote.

### EXEMPLE II - EVALUATION DU CROUSTILLANT D'UN PRODUIT ALIMENTAIRE FROMAGER SEC SELON L'INVENTION

L'impression sensorielle de croustillant du produit alimentaire fromager sec fabriqué selon l'exemple I est évalué par un panel de juges en comparaison avec des snacks du commerce.

Les snacks du commerce testés incluent le « 3D Bugles » goût nature de Benenuts, le « P'tit Belin » au fromage de Belin, le « Mini Snackies » Original de Tuc et le « Pringles » Original de Kelloggs.

Ont été évalués par les juges :
- l'impression globale de croustillant perçue lors de la consommation du morceau de produit testé :
   Le produit alimentaire fromager sec selon l'invention et « 3D Bugles » sont perçus comme les produits les plus croustillants en impression globale ; les résultats obtenus pour ces deux produits ne sont pas significativement différents.
- le nombre de mastication successive du produit testé pendant lesquelles un bruit significatif est perçu ;
Le descripteur du bruit présente un classement des produits similaire à celui de l'impression globale de croustillant et les deux produits ayant le score le plus élevé sont le produit alimentaire fromager sec selon l'invention et « 3D Bugles » (pas de différence significative entre ces deux produits).

Il ressort de ces études sensorielles que le produit alimentaire fromager sec selon l'invention peut être qualifié de très croustillant puisqu'il se classe ex-æquo avec le produit du marché testé le plus croustillant.

### EXEMPLE III - PREPARATION DE PRODUIT ALIMENTAIRE FROMAGER SEC SELON L'INVENTION

Préparation d'un fromage fondu selon la composition suivante :

| Composant | Taux (%) |
|---|---|
| Fol Epi allégé | 50 |
| Edam 30 | 20 |
| crème fraiche | 10 |
| Caséinate de calcium | 3 |
| Poudre de Lait Ecrémé | 4 |
| Citrate de sodium | 2,2 |
| Carbonate de Calcium | 0,3 |
| Eau | 10,5 |

Réalisation d'une bande d'environ 1mm d'épaisseur et découpe en formes triangulaires à bouts arrondis, d'environ 25 mm de côté.

Le diagramme de traitement est le même que pour l'exemple I, représenté à la Figure 4. Les pièces sont disposées sur des plaques de 39 X 48 cm et mises au congélateur à -55°C pendant 2 heures.

Les plaques de fromage congelé sont placées dans un lyophilisateur.

Une table de programmation permet la réalisation des phases de traitement souhaitées :
➢ Lancement du cycle de chauffage automatiquement après atteinte de la pression cible de 0.2 mbar dans l'enceinte de traitement ;
➢ Mise en température rapide des résistances de chauffe à 120°C (0 à 30 min) ;
➢ Maintien de la température de chauffe à 120°C pour 1 heure ;
➢ Refroidissement à 60°C, après 1 heure ;
➢ Mise en pression atmosphérique par ajout d'azote.

### EXEMPLE IV - PREPARATION DE PRODUIT ALIMENTAIRE LAITIER SEC SELON L'INVENTION

Préparation d'un mélange laitier selon la composition suivante :

| Composant | Taux (%) |
|---|---|
| Caillé frais | 54 |
| Poudre de caséine | 20 |
| Beurre | 14 |
| Crème fraîche | 10 |
| Citrate de sodium | 1,7 |
| Carbonate de Calcium | 0,3 |

Réalisation d'une bande d'environ 1mm d'épaisseur et découpe en formes triangulaires à bouts arrondis, d'environ 25 mm de côté.

Le diagramme de traitement est le même que pour l'exemple I, représenté à la **Figure 4**. Les pièces sont disposées sur des plaques de 39 X 48 cm et mises au congélateur à -55°C pendant 2 heures.

Les plaques de mélange laitier congelé sont placées dans un lyophilisateur.

Une table de programmation permet la réalisation des phases de traitement souhaitées :
➢ Lancement du cycle de chauffage automatiquement après atteinte de la pression cible de 0.6 mbar dans l'enceinte de traitement ;
➢ Mise en température rapide des résistances de chauffe à 110°C (0 à 30 min) ;
➢ Maintien de la température de chauffe à 110°C pour 10 minutes ;
➢ Refroidissement à 20°C, après 40 minutes ;
➢ Mise en pression atmosphérique par ajout d'azote.

## Revendications

1. Procédé de fabrication de produit alimentaire fromager ou laitier sec comprenant les étapes suivantes :
a) Congélation d'un fromage choisi parmi les pâtes pressées cuites et les fromages fondus ou d'un mélange laitier ayant une consistance permettant sa mise sous forme de tranches et leur manipulation, jusqu'à une température inférieure ou égale à -20°C ; ledit fromage ou ledit mélange laitier a une teneur en matière grasse inférieure ou égale à 40% en poids et est préalablement préparé en tranche d'une épaisseur inférieure ou égale à 4 mm ;
b) Mise sous vide dudit fromage congelé ou dudit mélange laitier congelé à une pression comprise entre 0,1 et 100 mbar ;
c) Chauffage dudit fromage congelé ou dudit mélange laitier congelé sous vide :
c1) Phase 1 : augmentation rapide de la température dudit fromage ou dudit mélange laitier jusqu'à une température de l'ordre de 110-120°C, en 12 à 120 minutes (en 0,2 à 2 heures), à une pression comprise entre 0,1 et 100 mbar et un flux d'extraction de la vapeur d'eau de 0,4 à 10 kg d'eau par kg de produit et par heure ; et
c2) Optionnellement, phase 2 : cuisson à une température comprise entre 60 et 160°C, une pression comprise entre 0,1 et 100 mbars et pendant 5 à 60 minutes ;
d) Refroidissement sous vide, à une pression comprise entre 0,1 et 100 mbar, jusqu'à une température comprise entre la température ambiante (15-20°C) et 80°C à la vitesse de diminution de la température comprise entre 50 et 70°C par heure ;
e) Pressurisation par compensation du vide avec un gaz sec, c'est-à-dire ayant un taux d'humidité inférieur à 3 ppm.

2. Procédé selon la revendication 1, **caractérisé en ce que** ledit fromage ou ledit mélange laitier a une teneur minimum en CO₂ de 5 mmole/kg.

3. Procédé selon l'une quelconque des revendications précédentes, **caractérisé en ce que** ledit fromage est un fromage de type pâte pressée cuite allégé ou un fromage fondu.

4. Procédé selon l'une quelconque des revendications 1 à 3, **caractérisé en ce que** ledit fromage fondu est obtenu à partir d'un mélange de fromages à pâte pressée cuite, fromages à pâte pressée non cuite, poudre de lait, poudre de caséine, par exemple, poudre de caséinate, crème laitière, optionnellement en présence de moins de 3% de sel de fonte, ou d'un autre ingrédient facilitant la fonte du fromage.

5. Procédé selon l'une quelconque des revendications 1 à 4, **caractérisé en ce que** ledit fromage fondu comprend un ou plusieurs arômes, aromates ou marquants à hauteur de 5% en poids par rapport au poids total dudit fromage fondu.

6. Procédé selon la revendication 1 ou la revendication 2, **caractérisé en ce qu'**il est mis en oeuvre avec un mélange laitier obtenu à partir d'un mélange de produits laitiers choisis parmi du caillé frais, du fromage frais, du fromage à pâte molle, de la poudre de lait, de la poudre de caséine, par exemple de la poudre de caséinate, de la crème laitière, du beurre, optionnellement en présence de moins de 3% de sel de fonte, ou d'un autre ingrédient facilitant la fonte du fromage.

7. Procédé selon l'une quelconque des revendications 1, 2 ou 6, **caractérisé en ce que** ledit mélange laitier comprend un ou plusieurs arômes, aromates ou marquants à hauteur de 5% en poids par rapport au poids total dudit mélange laitier.

8. Produit alimentaire fromager sec susceptible d'être obtenu par le procédé selon l'une quelconque des revendications 1 à 5, **caractérisé en ce qu'**il est un produit laitier lyophilisé et par :
- une activité en eau (a_{W}) comprise entre 0,1 et 0,4 ;
- une dimension telle que sa largeur est comprise entre 0,1 et 3 cm et sa longueur est comprise entre 0,1 et 11 cm ;
- une surface externe continue sans porosité ;
- une forme tridimensionnelle gonflée, creuse ou partiellement creuse avec deux faces convexes et des bords soudés ; et
- une texture croustillante.

9. Produit alimentaire laitier sec susceptible d'être obtenu par le procédé selon l'une quelconque des revendications 1, 2, 6 ou 7, **caractérisé en ce qu'**il est un produit laitier lyophilisé et par :
- une activité en eau (a_{w}) comprise entre 0,1 et 0,4 ;
- une dimension telle que sa largeur est comprise entre 0,1 et 3 cm et sa longueur est comprise entre 0,1 et 11 cm ;
- une surface externe continue sans porosité ;
- une forme tridimensionnelle gonflée, creuse ou partiellement creuse avec deux faces convexes et des bords soudés ; et
- une texture croustillante.

## Patentansprüche

1. Verfahren zur Herstellung eines trockenen Käse- oder Milch-Lebensmittelprodukts, umfassend die folgenden Schritte:
a) Tieffrieren eines Käses, ausgewählt aus den gepressten Kochkäsen und den Schmelzkäsen oder eines Milchgemischs mit einer Konsistenz, das seine Ausformung in Form von Scheiben und deren Handhabung erlaubt, bis zu einer Temperatur unter oder gleich - 20 °C; wobei der Käse oder das Milchgemisch einen Fettgehalt unter oder gleich 40 Gew.-% hat und zuvor als Scheibe mit einer Dicke unter oder gleich 4 mm zubereitet wurde;
b) Vakuumieren des tiefgefrorenen Käses oder des tiefgefrorenen Milchgemischs bei einem Druck zwischen 0,1 und 100 mbar inklusive;
c) Erwärmen des tiefgefrorenen Käses oder des tiefgefrorenen Milchgemischs im Vakuum:
c1) Phase 1: schnelle Erhöhung der Temperatur des Käses oder des Milchgemischs bis auf eine Temperatur von zirka 110-120 °C, innerhalb von 12 bis 120 Minuten (innerhalb von 0,2 bis 2 Stunden), bei einem Druck zwischen 0,1 und 100 mbar inklusive und einem Wasserdampf-Extraktionsfluss von 0,4 bis 10 kg Wasser je kg Produkt und je Stunde; und
c2) optional, Phase 2: Garen bei einer Temperatur zwischen 60 und 160 °C inklusive, einem Druck zwischen 0,1 und 100 mbar inklusive und während 5 bis 60 Minuten;
d) Abkühlen im Vakuum, bei einem Druck zwischen 0,1 und 100 mbar inklusive bis auf eine Temperatur zwischen der Raumtemperatur (15-20 °C) und 80 °C inklusive mit der Temperatursinkgeschwindigkeit zwischen 50 und 70 °C je Stunde inklusive;
e) Pressen durch Kompensieren des Vakuums durch ein Trockengas, das heißt mit einem Feuchtigkeitsgehalt unter 3 ppm.

2. Verfahren nach Anspruch 1, **dadurch gekennzeichnet, dass** der Käse oder das Milchgemisch einen Mindestgehalt an CO₂ von 5 mmol/kg hat.

3. Verfahren nach einem der vorangehenden Ansprüche, **dadurch gekennzeichnet, dass** der Käse ein Käse vom Typ fettreduzierter gepresste Kochkäse oder ein Schmelzkäse ist.

4. Verfahren nach einem der Ansprüche 1 bis 3, **dadurch gekennzeichnet, dass** der Schmelzkäse aus einem Gemisch von gepressten Kochkäsen, Hartkäsen, Milchpulver, Kaseinpulver, beispielsweise Kaseinatpulver, Milchcreme, gewonnen wird, optional bei Anwesenheit von weniger als 3 % Schmelzsalz oder einer anderen Zutat, welche das Schmelzen des Käses erleichtert.

5. Verfahren nach einem der Ansprüche 1 bis 4, **dadurch gekennzeichnet, dass** der Schmelzkäse ein oder mehrere Aromen, Aromaten oder Marker in Höhe von 5 Gew.-% in Bezug zum Gesamtgewicht des Schmelzkäses umfasst.

6. Verfahren nach Anspruch 1 oder Anspruch 2, **dadurch gekennzeichnet, dass** es mit einem Milchgemisch durchgeführt wird, das aus einem Gemisch von Milchprodukten gewonnen wird, die aus frischem Bruch, Frischkäse, Weichkäse, Milchpulver, Kaseinpulver, beispielsweise Kaseinatpulver, Milchcreme, Butter ausgewählt sind, optional bei Anwesenheit von weniger als 3 % Schmelzsalz oder einer anderen Zutat, welche das Schmelzen des Käses erleichtert.

7. Verfahren nach einem der Ansprüche 1, 2 oder 6, **dadurch gekennzeichnet, dass** das Milchgemisch ein oder mehrere Aromen, Aromaten oder Marker in Höhe von 5 Gew.-% in Bezug zum Gesamtgewicht des Milchgemischs umfasst.

8. Trockenes Käse-Lebensmittelprodukt, das mit dem Verfahren nach einem der Ansprüche 1 bis 5 gewinnbar ist, **dadurch gekennzeichnet, dass** es ein gefriergetrocknetes Milchprodukt ist und durch:
- eine Aktivität in Wasser (a_{w}) zwischen 0,1 und 0,4 inklusive;
- eine Größe, die derart ist, dass seine Breite zwischen 0,1 und 3 cm inklusive ist und seine Länge zwischen 0,1 und 11 cm inklusive ist;
- eine kontinuierliche äußere Oberfläche ohne Porosität;
- eine aufgeblähte, hohle oder teilweise hohle dreidimensionale Form mit zwei konvexen Seiten und verschweißten Rändern; und
- eine knusprige Textur.

9. Trockenes Milch-Lebensmittelprodukt, das mit dem Verfahren nach einem der Ansprüche 1, 2, 6 oder 7 gewinnbar ist, **dadurch gekennzeichnet, dass** es ein gefriergetrocknetes Milchprodukt ist und durch:
- eine Aktivität in Wasser (a_{w}) zwischen 0,1 und 0,4 inklusive;
- eine Größe, die derart ist, dass seine Breite zwischen 0,1 und 3 cm inklusive ist und seine Länge zwischen 0,1 und 11 cm inklusive ist;
- eine kontinuierliche äußere Oberfläche ohne Porosität;
- eine aufgeblähte, hohle oder teilweise hohle dreidimensionale Form mit zwei konvexen Seiten und verschweißten Rändern; und
- eine knusprige Textur.

## Claims

1. A method to produce a dry cheese or dairy food product, comprising the following steps:
a) Freezing a cheese selected from among cooked pressed cheeses and processed cheeses or a dairy mixture the consistency of which allows the forming in sliced form and handling thereof, down to a temperature of -20°C or lower; said cheese or said dairy mixture having a fat content of 40 weight % or less and being previously prepared in slices of 4 mm thickness or less;
b) Placing said frozen cheese or said frozen dairy mixture in a vacuum at a pressure of between 0.1 and 100 mbar;
c) Heating said frozen cheese or said frozen dairy mixture in a vacuum:
c1) Phase 1: rapidly increasing the temperature of said cheese or said dairy mixture up to a temperature in the order 110-120°C in 12 to 120 minutes (in 0.2 to 2 hours), at a pressure of between 0.1 and 100 mbar and under a water vapour extraction flow of 0.4 to 10 kg water per kg of product and per hour; and
c2) Optionally, phase 2: baking at a temperature of between 60 and 160°C, at a pressure of between 0.1 and 100 mbar for 5 to 60 minutes;
d) Cooling in a vacuum, at a pressure of between 0.1 and 100 mbar, down to a temperature between ambient temperature (15-20°C) and 80°C at a temperature lowering rate of between 50 and 70°C per hour;
e) Pressurising via vacuum compensation with a dry gas i.e. having a humidity content of less than 3 ppm.

2. The method according to claim 1, **characterized in that** said cheese or said dairy mixture has a minimum CO₂ content of 5 mmole/kg.

3. The method according to any of the preceding claims, **characterized in that** said cheese is a cheese of low-fat, cooked pressed type or a processed cheese.

4. The method according to any of claims 1 to 3, **characterized in that** said processed cheese is obtained from a mixture of cooked pressed cheeses, uncooked pressed cheeses, milk powder, casein powder e.g. caseinate powder, dairy cream, optionally in the presence of less 3 % emulsifying salt or other ingredient facilitating emulsification of the cheese.

5. The method according to any of claims 1 to 4, **characterized in that** said processed cheese comprises one or more flavourings, herbs and spices or inclusions up to a proportion of 5 % by weight relative to the total weight of said processed cheese.

6. The method according to claim 1 or 2, **characterized in that** it is implemented with a dairy mixture obtained from a mixture of dairy products selected from among fresh curd, fresh cheese, soft cheese, milk powder, casein powder e.g. caseinate powder, dairy cream, butter, optionally in the presence of less than 3 % emulsifying salt or other ingredient facilitating cheese emulsification.

7. The method according to any of claims 1, 2 or 6, **characterized in that** said dairy mixture comprises one or more flavourings, herbs and spices or inclusions up to a proportion of 5 % by weight relative to the total weight of said dairy mixture.

8. A dry cheese food product able to be obtained with the method according to any of claims 1 to 5, **characterized in that** it is a freeze-dried dairy product and **characterized by**:
- water activity (a_{w}) of between 0.1 and 0.4;
- a size such that its width is between 0.1 and 3 cm and length between 0.1 and 11 cm;
- a continuous outer surface without any porosity;
- a three-dimensional puffed, hollow or partly hollow shape with two convex sides and joined edges; and
- a crunchy texture.

9. A dry dairy food product able to be obtained with the method according to any of claims 1, 2, 6 or 7, **characterized in that** it is a freeze-dried dairy product and **characterized by**:
- water activity (a_{w}) of between 0.1 and 0.4;
- a size such that its width is between 0.1 and 3 cm and length between 0.1 and 11 cm;
- a continuous outer surface without any porosity;
- a three-dimensional puffed, hollow or partly hollow shape with two convex sides and joined edges; and
- a crunchy texture.
